# EUROPEAN PATENT SPECIFICATION

(11) **EP 1 316 600 B1**
(45) Date of publication and mention of the grant of the patent: **12.04.2006**
(21) Application number: 02080010.8
(22) Date of filing: 28.11.2002
(51) Int. Cl.: C09K 21/00, B32B 7/02, E04D 1/00

(54) **A fire resistant, flexible laminate**
Feuerbeständiges, biegsames Laminat
Produit multicouche ignifuge et flexible

(30) Priority: 30.11.2001 DK 200101776
(43) Date of publication of application: 04.06.2003
(73) Proprietor: ICOPAL A/S, 2730 Herlev (DK)
(72) Inventor: Bunch-Nielsen, Tommy, 2830 Virum (DK); Jensen, Eirik Sandberg, 4000 Roskilde (DK)
(74) Representative: Plougmann & Vingtoft A/S

(56) References cited:
- WO-A-93/23245
- FR-A- 2 558 505
- GB-A- 2 281 051

## Description

### Technical field

The present invention relates to a fire resistant, flexible laminate, which may, for example, advantageously be used for protecting a roof terrace structure or a similar supporting structure.

### Background of the invention

Roof terraces are often used for activities involving the use of open fire, such as grilling or barbecuing. Thus, burning or glowing solid fuel particles, such as charcoal particles, or burning lighting liquid fuel may unintentionally be spilled or dropped so as to come in contact with an underlying combustible heat insulating layer or a combustible protective layer or plastic film covering the same, whereby a fire may spread down through the roof construction.

WO 93/23245 discloses a fire protective flexible composite system suitable for use as a fire and smoke barrier for static or dynamic joints within multi-storey buildings. The composite system includes a metal foil in order to avoid spread of fire and smoke.

Furthermore, FR-A-2558505 discloses a facing layer for vertical building walls made from fire resistant fibres and having a water impermeable underlying layer.

### Summary of the invention

It is an object of the present invention to provide a flexible protective laminate adapted to be placed for example between a non-combustible terrace covering, such as flags or tiles forming narrow spaces therebetween.

Thus, the present invention provides a flexible laminate of the type comprising a layer of material open to diffusion of water vapour, a film or membrane impervious to water, but open to diffusion of water vapour, and a fire retardant being incorporated in or arranged adjacent to said layer open to diffusion of water vapour.

A laminate of this kind formed by a plurality of partly overlapping sheets is disclosed in GB-A-2281051 and is suited for use in covering pitched roofs. The overlapping sheets are arranged in a similar manner to roof tiles, and water vapour may escape along a path formed by a permeable support substrate in the overlapped areas.

The laminate according to the present invention is characterised in that said layer of material is a layer of non-combustible mineral fibres, and that said water impervious film or membrane has a resistance to water penetration of at least 10 m water column and a resistance to water vapour diffusion less than 2 m air column.

Such laminate, which may be rolled up so as to form a roll, may preferably be installed such that the water impervious film or membrane is positioned below and thereby protected by the layer of non-combustible material.

By the use of a flexible laminate being impervious to water, but open to diffusion of water vapour, in a roof construction comprising a heat insulation layer, it is ensured, that moisture is not accumulated within the roof construction e.g. in the heat insulation layer. This further ensures a higher efficiency of the heat insulation layer.

The fire retardant may be arranged in any position within or adjacent to the layer of non-combustible material, Thus, it may be arranged between the layer of non-combustible material and said film or membrane, and in a preferred embodiment the fire retardant may be incorporated in a layer of adhesive arranged between said layer of non-combustible material and said film or membrane.

The layer of non-combustible material may form an outer layer of the laminate and is then preferably the upper layer when the laminate is in use. However, it may be advantageous to further provide the laminate with a cover layer covering the outer surface of the layer of non-combustible material or of the film or membrane. E.g. the cover layer may form the outer layer covering the layer of non-combustible material or it may be placed between the layer of non-combustible material and the film or membrane. Such cover layer may serve as a backing layer strengthening the layer of non-combustible material, or it may protect the water impervious film or membrane. Such cover layer may, for example, be a spun bonded non-woven plastic material, such as polypropylene, polyester, polyethylene or a water repellent textile having a porous/open structure. The cover layer may have a weight of 40-110 g/m², preferably about 50 g/m².

When such cover layer is used the fire retardant may be arranged between the layer of non-combustible material and the cover layer, for example be incorporated in an adhesive layer arranged between such layers.

It is important that said film or membrane is pervious to water vapour in order to allow moisture to diffuse out from inner spaces in a structure, in which the laminate according to the invention may be incorporated. Therefore, preferably the water vapour diffusion resistance of said film or membrane may be less than 0.55 m air column.

It is preferred that the non-combustible material has a relatively low thermal conductivity in order to reduce the risk that excessive heat from burning fuel particles coming into contact with the non-combustible material is transferred to the underlying film or membrane. Thus, the layer of non-combustible material may preferably comprise materials, such as fibreglass, glass felt or rock wool fibres.

When the layer of non-combustible material comprises glass felt, the weight of such glass felt layer should normally be at least 50 g/m²*,* preferably 70-80 g/m², such as about 75 g/m². The film or membrane, which may preferably be a plastic film, may advantageously be made from a non-porous, monolithic plastic material in order to avoid so-called "tent effect". As an example, the water impervious film or membrane could be made from thermoplastic polyether urethane (TPU), polyether block amides (PEBAX^{(R)}), ethylene vinyl alcohol (EVOH), co-polyester, co-polyamide (Arnitel ®), acrylic, or another polymer. The weight of the film or membrane may preferably be 20-30 g/m², such as about 25 g/m².

In order to avoid a fire to spread down through the construction a fire retardant, which reduces the fire propagation, may be used. The fire retardant used in the laminate according to the invention may comprise any conventional fire retardant, such as water glass. However, a preferred fire retardant may be intumescent graphite, which may expand to a volume being up to 100 times the initial volume.

According to another aspect, the present invention relates to a roof terrace including a fire resistant laminate as described above.

### Brief description of the drawings

An embodiment of a fire resistant, flexible laminate according to the present invention and an example of its use are for illustration of the invention described below with reference to the accompanying drawings of which
Fig. 1 is a sectional view showing part of a conventional roof terrace structure, and
Fig. 2 is a sectional view of a flexible, fire resistant laminate according to the invention.

### Detailed description of the drawings

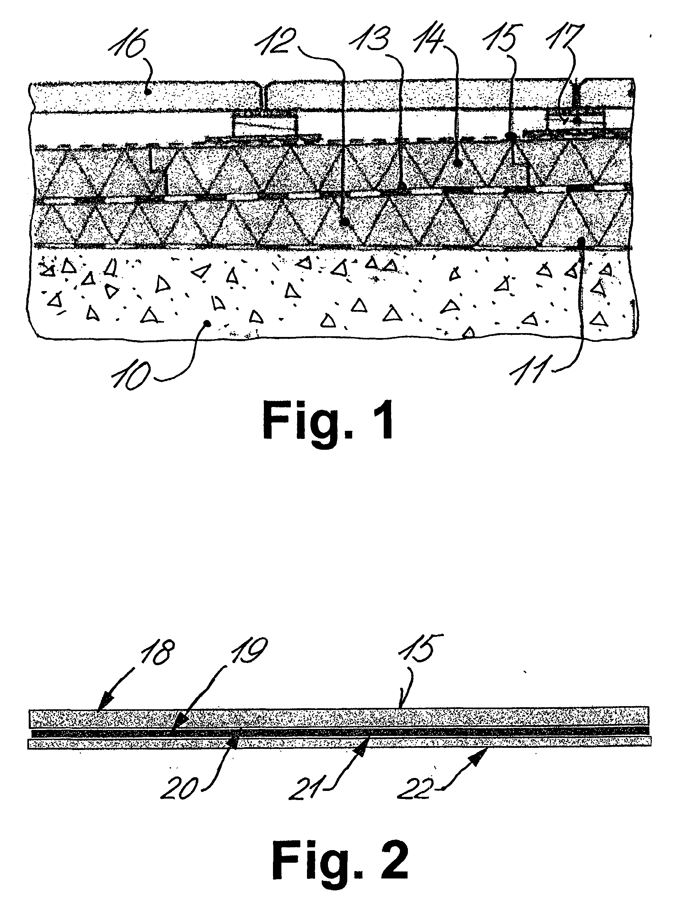

The roof terrace structure shown in Fig. 1, which is of a known type, comprises a concrete sealing 10 on top of which a vapour barrier 11 in the form of a plastic film is arranged. A layer of conventional heat insulating material 12 is arranged on top of the vapour barrier 11, and the upper surface of the insulating layer 12 is covered by a roof membrane 13. A layer 14 of boards provided with tongues and grooves and placed on top of the roof membrane may, for example, be made from a plastic material, such as polystyrene. The upper surface of the board layer 14 may be covered by a laminate 15 in accordance with the present invention. The floor terrace surface is defined by a layer of tiles 16, which are supported on the laminate 15 via support members 17.

Fig. 2 shows an embodiment of the laminate 15 according to the invention. The laminate comprises an upper layer 18 of a spun bonded non-woven polypropylene, an adhesive layer 19, a water impervious, vapour penetrable plastic film 20, an adhesive layer 21, and a layer 22 of glass felt.

The layer 18 of non-woven polypropylene preferably has a weight of about 50 g/m². The plastic film 20 is made from a monolithic, water impermeable and vapour penetrable plastic material having a weight of about 25 g/m² and a water vapour diffusion resistance of less than 0.55 m air column.

The adhesive layer 21 intermediate of the film 20 and the layer 22 of glass felt preferably contains intumescent graphite as a fire retardant contributing to the fire protective effect of the glass felt 22.

## Claims

1. A flexible laminate comprising
- a layer (22) of material open to diffusion of water vapour,
- a film or membrane (20) impervious to water, but open to diffusion of water vapour, and
- a fire retardant being incorporated in or arranged adjacent to said layer open to diffusion of water vapour,
**characterised in that** said layer of material (22) is a layer of non-combustible mineral fibres, and that said water impervious film or membrane (20) has a resistance to water penetration of at least 10 m water column and a resistance to water vapour diffusion less than 2 m air column.

2. A laminate according to claim 1, wherein the fire retardant is arranged between the layer of non-combustible material (22) and said film or membrane (20).

3. A laminate according to claim 1, wherein the fire retardant is incorporated in a layer of adhesive (21) arranged between said layer of non-combustible material (22) and said film or membrane (20).

4. A laminate according to any of the claims 1-3, further comprising a cover layer covering the outer surface of the layer of non-combustible material or of the film or membrane.

5. A laminate according to claim 4, wherein said cover layer is a spun bonded non-woven plastic material.

6. A laminate according to claim 4 or 5, wherein the fire retardant is arranged between the layer of non-combustible material and the cover layer.

7. A laminate according to any of the claims 1-6, wherein the water vapour diffusion resistance of said film or membrane (20) is less than 0.55 m air column.

8. A laminate according to any of the claims 1-7, wherein the non-combustible material has a low thermal conductivity.

9. A laminate according to any of the claims 1-8, wherein the film or membrane (20) is made from a non-porous, monolithic material.

10. A laminate according to any of the claims 1-9, wherein the layer of non-combustible material (22) comprises fibreglass or glass felt.

11. A laminate according to any of the claims 1-9, wherein the layer of non-combustible material (22) comprises rock wool fibres or other mineral fibres.

12. A laminate according to any of the claims 1-11, wherein said fire retardant comprises intumescent graphite and/or water glass.

13. A roof terrace structure including a fire resistant laminate according to any of the claims 1-12.

## Revendications

1. Stratifié flexible comprenant
une couche (22) de matériau ouvert à la diffusion de vapeur d'eau,
un film ou une membrane (20) imperméable à l'eau, mais ouvert à la diffusion de vapeur d'eau, et
un agent ignifuge étant incorporé dans ladite couche ouverte à la diffusion de vapeur d'eau ou disposé en position adjacente à celle-ci,
**caractérisé en ce que** ladite couche de matériau (22) est une couche de fibres minérales non combustibles, et **en ce que** ledit film ou membrane imperméable à l'eau (20) a une résistance à la pénétration de l'eau d'au moins 10 m de colonne d'eau et une résistance à la diffusion de vapeur d'eau de moins de 2 m de colonne d'air.

2. Stratifié selon la revendication 1, dans lequel l'agent ignifuge est disposé entre la couche de matériau non combustible (22) et ledit film ou la membrane (20).

3. Stratifié selon la revendication 1, dans lequel l'agent ignifuge est incorporé dans une couche d'adhésif (21) disposée entre ladite couche de matériau non combustible (22) et ledit film ou la membrane (20).

4. Stratifié selon l'une quelconque des revendications 1 à 3, comprenant en outre une couche de couverture couvrant la surface externe de la couche de matériau non combustible ou du film ou de la membrane.

5. Stratifié selon la revendication 4, dans lequel la dite couche de couverture est en un matériau plastique non tissé filé-lié.

6. Stratifié selon la revendication 4 ou 5, dans lequel l'agent ignifuge est disposé entre la couche de matériau non combustible et la couche de fermeture.

7. Stratifié selon l'une quelconque des revendications 1 à 6, dans lequel la résistance à la diffusion de vapeur d'eau dudit film ou de la membrane (20) est inférieure à 0,55 m de colonne d'air.

8. Stratifié selon l'une quelconque des revendications 1 à 7, dans lequel le matériau non combustible a une faible conductivité thermique.

9. Stratifié selon l'une quelconque des revendications 1 à 8, dans lequel le film ou la membrane (20) est fait d'un matériau monolithique non poreux.

10. Stratifié selon l'une quelconque des revendications 1 à 9, dans lequel la couche de matériau non combustible (22) comprend de la fibre de verre ou du feutre de verre.

11. Stratifié selon l'une quelconque des revendications 1 à 9, dans lequel la couche de matériau non combustible (22) comprend des fibres de laine de roche ou d'autres fibres minérales.

12. Stratifié selon l'une quelconque des revendications 1 à 11, dans lequel ledit agent ignifuge comprend du graphite intumescent et/ou du silicate de sodium.

13. Structure de terrasse de toit comprenant un stratifié ignifuge selon l'une quelconque des revendications 1 à 12.

## Patentansprüche

1. Biegsames Laminat mit
einer Schicht (22) aus Material, das für die Diffusion von Wasserdampf offen ist,
einer Folie oder Membran (20), die für Wasser undurchlässig, aber für die Diffusion von Wasserdampf offen ist, und
einem feuerhemmenden Mittel, das in der Schicht, die für die Diffusion von Wasserdampf offen ist, enthalten oder zu ihr benachbart angeordnet ist,
**dadurch gekennzeichnet, dass**
die Materialschicht (22) eine Schicht aus nicht brennbaren Mineralfasern ist und dass die wasserundurchlässige Folie oder Membran (20) einen Widerstand gegenüber Wasserdurchdringung von mindestens 10 m Wassersäule und einen Widerstand gegenüber Wasserdampf-Diffusion von weniger als 2 m Luftsäule hat.

2. Laminat nach Anspruch 1, wobei das feuerhemmende Mittel zwischen der Schicht aus nicht brennbarem Material (22) und der Folie oder Membran (20) angeordnet ist.

3. Laminat nach Anspruch 1, wobei das feuerhemmende Mittel in einer Schicht aus Klebstoff (21) enthalten ist, die zwischen der Schicht aus nicht brennbarem Material (22) und der Folie oder Membran (20) angeordnet ist.

4. Laminat nach einem der Ansprüche 1 - 3, des Weiteren mit einer Deckschicht, die die äußere Oberfläche der Schicht aus nicht brennbarem Material oder der Folie oder Membran bedeckt.

5. Laminat nach Anspruch 4, wobei die Deckschicht ein nicht gewebtes Kunststoff-Spinnvlies ist.

6. Laminat nach Anspruch 4 oder 5, wobei das feuerhemmende Mittel zwischen der Schicht aus nicht brennbarem Material und der Deckschicht angeordnet ist.

7. Laminat nach einem der Ansprüche 1 - 6, wobei der Wasserdampf-Diffusionswiderstand der Folie oder Membran (20) geringer als 0,55 m Luftsäule ist.

8. Laminat nach einem der Ansprüche 1 - 7, wobei das nicht brennbare Material eine niedrige Wärmeleitfähigkeit hat.

9. Laminat nach einem der Ansprüche 1 - 8, wobei die Folie oder Membran (20) aus einem nicht porösen, monolithischen Material hergestellt ist.

10. Laminat nach einem der Ansprüche 1 - 9, wobei die Schicht aus nicht brennbarem Material (22) Glasfaser oder Glasfilz umfasst.

11. Laminat nach einem der Ansprüche 1 - 9, wobei die Schicht aus nicht brennbarem Material (22) Steinwollefasern oder andere Mineralfasern umfasst.

12. Laminat nach einem der Ansprüche 1 - 11, wobei das feuerhemmende Mittel intumeszentes Graphit und/oder Wasserglas umfasst.

13. Dachterrassen-Aufbau, der ein feuerbeständiges Laminat nach einem der Ansprüche 1 - 12 aufweist.
